# EUROPEAN PATENT SPECIFICATION

(11) **EP 0 788 423 B1**
(45) Date of publication and mention of the grant of the patent: **05.08.1998**
(21) Application number: 95932847.7
(22) Date of filing: 02.10.1995
(51) Int. Cl.: B29C 63/34, B29C 35/10, F16L 55/165

(54) **IMPROVEMENTS RELATING TO LINING OF PIPELINES AND PASSAGEWAYS**
VERBESSERUNGEN IN BEZUG AUF DIE AUSKLEIDUNG VON ROHRLEITUNGEN UND DURCHGÄNGEN
PERFECTIONNEMENTS LIES AU REVETEMENT DE PIPELINES ET DE PASSAGES

(30) Priority: 24.10.1994 GB 9421369; 14.01.1995 GB 9500739
(43) Date of publication of application: 13.08.1997
(73) Proprietor: SOUND PIPE LTD, Grand Turk, Turks and Caicos Islands (TC)
(72) Inventor: CHANDLER, Brian, Burnett, A-8933 St Gallen 60 (AT)
(74) Representative: Denmark, James
(86) International application number: GB9502328
(87) International publication number: WO9612605

(56) References cited:
- EP-A- 0 241 297
- WO-A-92/16784
- CH-A- 676 029
- DE-A- 3 732 694
- DE-C- 4 205 113

## Description

This invention relates to the lining of pipelines and passageways, and concerns a means and method whereby a lining tube which is placed on the inner surface of a pipeline or passageway is subjected to a radiation treatment which has an effect on the material of the lining tube, for a purpose which will appear clear hereinafter.

A large industry has been established in the rehabilitation and repair of pipelines and passageways by the placement on the surface of the pipeline or passageway of a lining material in the form of a tube.

A now well known method has become known as "cured in place" or CIP. In CIP lining a tube of resin absorbent material is soaked in a curable synthetic resin, and the tube whilst still flexible in nature is introduced into the pipeline or passageway and is inflated onto the pipeline or passageway surface so as to lie thereon and conform thereto. Whilst the tube is so held, the resin is allowed or caused to cure (usually heat is applied to accelerate curing) so that there results a hard lining pipe lying on the pipeline or passageway surface. Basic procedures for carrying out this method are set forth in US patents 4009063 and 4064211, although many subsequent patents have been obtained for improvements in the basic process.

In another method of applying a lining tube, a rigid thermoplastic material tube is introduced into the pipeline or passageway, and it is subjected to heat so as to soften the plastics material. An internal pressure forces the soft pipe onto the pipeline or passageway surface, and then the pipe is cooled so that the inflated and reshaped thermoplastic pipe forms a lining which functions in a similar manner to a CIP lining discussed above. The heat may be applied to the thermoplastic material at any convenient position e.g. before the thermoplastic material is introduced into the pipeline or passageway or after it is introduced, or both. In this connection, European Patent Application 0241297 discloses a device for heating plastic pipe linings wherein the device is a heater having end seals to seal against the pipe lining.

Swiss Patent No. 676029 on the other hand, discloses a number of techniques for the curing of a CIP lining including conductive heating, light, gas, electrical heating and heating by micro waves, but in relation to the last form of heating, namely micro waves, with which the present invention is concerned, no specific details are given as to how the micro waves might be used and therefore gives no indication of the economic and efficient use of the micro waves. It is for example important that the entire lining be treated with the energy for the even curing of the lining.

The present invention is concerned with the use of micro wave in a particular manner which gives even and economical application of the micro wave energy.

The present invention applies to each of the indicated lining methods, but it has particular application to CIP linings which are of a nature such that the resin contained therein will remain "quiescent" until activated by some external means. CIP linings with this resin system are described as having a latent resin system. The advantage of this is that the linings can be manufactured and impregnated at some considerable time before they have to be used. In other words impregnated linings can be stored in stock, and then taken from stock to order. This differs from the normal method of performing CIP processes wherein the resin is applied to the lining tube shortly before it is to be used, and the impregnated lining is taken to the site as soon as possible after impregnation so that premature curing will not take place. Indeed, many CIP processes involve impregnating the lining at the location of the site.

In practise, latent resin systems have not been utilised to any substantial extent and this invention seeks to provide a method and means whereby latent curing systems can be utilised efficiently and reliably. The method and means can also be used for the treatment of thermoplastic pipes for the softening of same.

There have been proposed a number of latent resin systems, each of which involves providing a specific resin formulation or mixture, or the inclusion of some additional means in the resin which renders it quiescent. Thus, in a first proposal, a resin system which could only be activated for curing by means of light radiation was proposed, but difficulties were encountered in practise in causing effective cure using ultra violet lights. An example of a light curing method for a cured in place lining is described in US patent 4581247.

Other methods for providing a latent resin system have involved embodying micro-capsules in the resin mix, the micro-capsules containing the resin catalyst, the provision in the resin of electro-magnetically activatable particles, the inclusion of clay particles in which the catalyst is absorbed, and so on. The examples of these methods are disclosed in the following patent applications International Patent Application PCT/GB94/01453, International Patent Application PCT/GB93/00107.

According to the present invention there is provide a method of lining a pipeline or passageway wherein a lining tube positioned in the pipeline or passageway has an apparatus passed therethrough, and the apparatus provides microwave energy radially directed at the inside of the lining tube, and the lining tube is sensitive to that energy in either of two ways namely (i) it has a curable resin therein which is cured by the application of the energy or (ii) it is thermoplastic and contains a particulate polar material which heats up under the action of the microwave energy to soften the tube so that it can be expanded, characterised in that the microwave energy is in the form of one or more radial streams which are rotated about the axis of the pipeline or passageway as the apparatus is passed through the lining tube.

Preferably, the said one or more radial streams is/are rotated by rotation of the waveguide and the energy generating source may be part of the apparatus, and may be arranged to direct a stream of microwave energy radially and is rotated about the axis of the pipeline or passageway.

Preferably also, the energy is supplied through a coaxial cable to a dipole which is arranged to emit the energy radially of the pipeline or passageway, and in a particular form, the energy is focused by a reflector into a beam, and the reflector is rotatable to cause the beam to rotate peripherally of the lining tube.

The invention also provides apparatus for performing the method as aforesain, comprising a microwave energy source, a waveguide adapted to direct energy from the source radially into the lining tube, and means to cause progression of the radially directed energy circumferentially of the lining tube.

In the said apparatus said waveguide may be rotatable relative to the microwave energy source to effect said circumferential progression, whilst in another case the microwave energy source is fixed relative to the waveguide.

The microwave energy source may be mounted for rotation with the waveguide.

The energy source may include a dipole at the end of a coaxial cable.

In one particular arrangement, there may be a parabolic reflector arranged to focus the energy from the dipole into a radial beam and in such case, the waveguide may comprise spaced discs with the reflector beng adapted to be rotated around the dipole.

In an alternative arrangement, the waveguide may be in the form of one or more arms.

According to another aspect of the invention, an apparatus for heating a lining of a pipeline or passageway comprises a microwave energy source, a waveguide adapted to direct energy from the source radially into the lining tube, said waveguide comprising a pair of spaced discs adapted to lie with their planes transverse to the axis of the pipeline or passageway.

In this apparatus according to the discs may have sealing members at the periphery thereof to seal against the pipeline or passageway surface and the microwave energy source may comprises an antenna at the centre of the waveguide.

Preferably, the energy source comprises a magnetron connected to the antenna but located outside the waveguide, and the magnetron may be contained in an insulated canister along with other electrical components to provide the required output from the magnetron, and the canister is adapted to travel along the pipeline or passageway with the waveguide, and power is supplied thereto by an electrical cable.

Where the lining tube is a thermoplastic tube, it will require to have embedded therein particles which are polar in nature i.e. they are sensitive to the microwave energy so that the particles heat up, as the plastics material in itself is unlikely to be affected by microwave energy. Many materials are polar in nature including clays, ferrites, chromium dioxide manganese, zinc and so on.

In the case of a CIP lining tube, the resin system used must also be sensitive to the microwave energy and if it is not it will have to include an additive such as any of the additives as discussed above. Thus, the resin system may include activatable particles or clays or other absorbent materials such as ferromagnetic materials and graphite containing catalyst, or a combination of these ingredients.

Embodiments of the invention will now be described, by way of example, with reference to the accompanying diagrammatic drawings, wherein;-
Fig. 1 is a view illustrating the insertion of a CIP lining tube in an underground sewer;
Fig. 2 is an enlarged view showing a section of the lining tube to illustrate its construction;
Fig. 3 is a view similar to Fig. 1, but showing the insertion of a thermoplastic pipe into an underground pipeline which may typically be a water or gas main;
Fig. 4 is a view similar to Fig. 2 showing the construction of the lining tube of Fig. 3;
Fig. 5 illustrates the method and apparatus of one embodiment of the invention when in position inside either the lining tube of Fig. 1 or the lining tube of Fig. 4;
Fig. 6 is an end view looking in the direction of arrow VI in Fig. 5;
Fig. 7 shows a view similar to Fig.6 in which a modified radial wave guide arrangement is illustrated;
Fig. 8 is a sectional view similar to Fig. 5 illustrating the method and apparatus of another embodiment of the present invention;
Fig. 9 is a sectional view similar to Fig. 5 illustrating the method and apparatus of another embodiment of the present invention;
Fig. 10 is a sectional view taken on the line IX-IX of Fig. 9;
Fig. 11 is a sectional view similar to Fig. 5 illustrating the method and apparatus of yet another embodiment of the present invention;
Fig. 12 is a view showing how a microwave energy source may be used according to another embodiment of the invention; and
Fig. 13 is a view similar to Fig. 12 showing how the source as used in Fig. 12 can be used for curing a CIP lining.

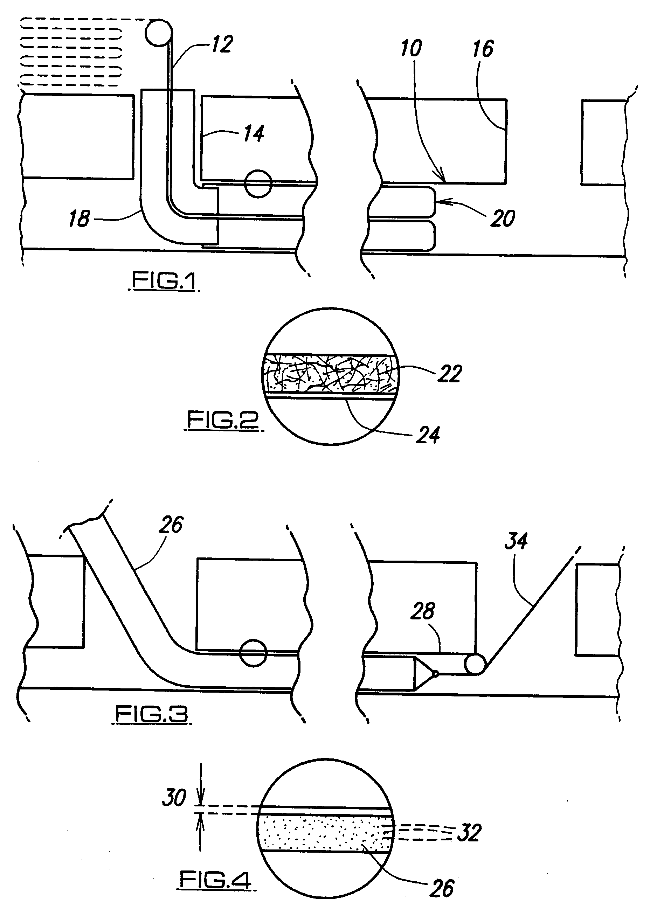

Referring to the drawings, in Fig. 1 is shown the application of a CIP lining tube to an underground sewer 10. The tube illustrated by reference numeral 12 is being applied between manholes 14 and 16 in conventional manner which involves the use of an elbow pipe 18 in manhole 14. To the bottom end of the elbow pipe 18 is attached a leading end of the lining tube 12 after that leading end has been fed through the pipe 18. Water or other everting fluid is then poured into the pipe 18 which causes the tube 12, which is flexible although impregnated with a curable synthetic resin, to evert as shown at 20 into and along the sewer 10, so as to be applied thereto. When the tube has been fully applied between the manholes 14 and 16, the resin is caused to cure so that the lining 12 becomes a hard pipe lying on the surface of the sewer 10. The ends are trimmed and any lateral connections which have been covered up in the process are re-established in order to complete the lining operation. This practise is now extremely well known and is utilised throughout the world. Other methods of placement of the tube 12 onto the sewer 10 are known, and in fact the method of application of the tube to the sewer surface is irrelevant as far as the present invention is concerned.

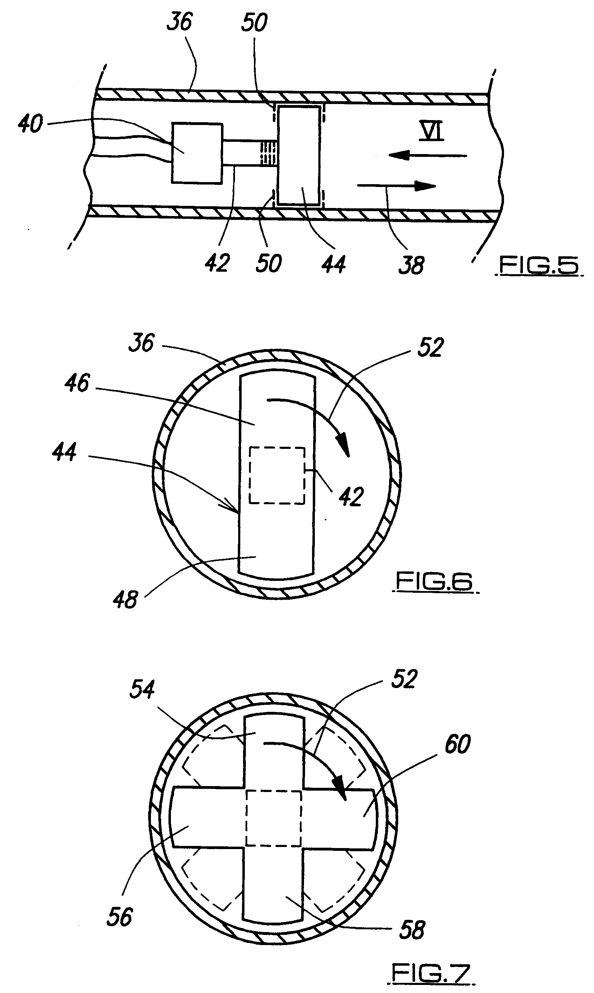

Fig. 2 is included to illustrate the construction of the lining tube 12. It comprises a resin absorbent layer or layers 22 of felt or the like which is or are thoroughly saturated with the synthetic resin to be cured. To the inside is a membrane or film 24 which forms the means whereby the tube can be inflated, and which in the finished product forms a smooth surface enhancing flow through the cured lining. The application of these linings as is well known is for rehabilitation and/or repair of the sewer 10.

In the arrangement of Fig. 3, a thermoplastic tube 26 is winched into and along the underground pipeline 28, which may typically be a gas or water pipe, and the diameter of the pipe 26 will be slightly less than that of the pipe 28 to provide the radial clearance 30 shown in Fig. 4. Fig. 3 is self explanatory in illustrating how the pipe 26 is winched into pipe 28, and Fig. 4 shows that the pipe 26 contains activatable particles 32 which are polar in nature and cause the tube 26 to heat up when subjected to the radiation as described hereinafter. As the tube 26 heats so it softens and the pipe 26 can then be inflated up to the wall of the pipe 28 so as to eliminate the clearance 30, and when the pipe has been so inflated, it is then cooled so as to re-rigidify in the enlarged diameter and so form an effective lining for the pipe 28. Again the ends must be finished, and laterals must be re-established, but such finishing operations form no part of the present invention. Reference 34 in Fig. 3 is a winch rope whose purpose will be self explanatory.

Fig. 5 illustrates one embodiment of the present invention in apparatus and in method. In that figure, 36 represents the lining pipe when in position either as shown in Fig. 1 or in Fig. 3, and there is then pulled through the pipe in the direction of arrow 38 an apparatus comprising a magnetron 40 by which microwaves are generated, an axial wave guide 42 along which the microwave energy is supplied, and a radial wave guide 44 by which the energy is directed radially outwardly and onto the lining tube 36. If the tube is a CIP lining tube, the resin will be heated by the action of the microwave energy, and therefore curing will commence. The speed of the apparatus along the lining tube in the direction of arrow 38 will be related to the speed at which the lining material cures. As shown in Fig. 6, the radial wave guide 44 is made up of a pair of diametrically opposite radial arms 46 and 48 which redirect the energy radially outwardly so that it can emit energy from the ends of the arms 46 and 48 onto the lining tube 36 which arms preferably are closed by means of microwave invisible material such as PERSPEX (trade mark). In order to keep residual moisture which may be in the lining tube clear of the ends of the wave guide arms 46 and 48, there may be flexible skirts 50 at the ends of said arms which bear upon the inner surface of the tube 36.

In order to ensure that the entire lining tube 36 is treated with energy, the emergent energy is caused to rotate as indicated by arrow 52. To this end, the entire apparatus may rotate, or it may be arranged so that the radial wave guide 44 only rotates.

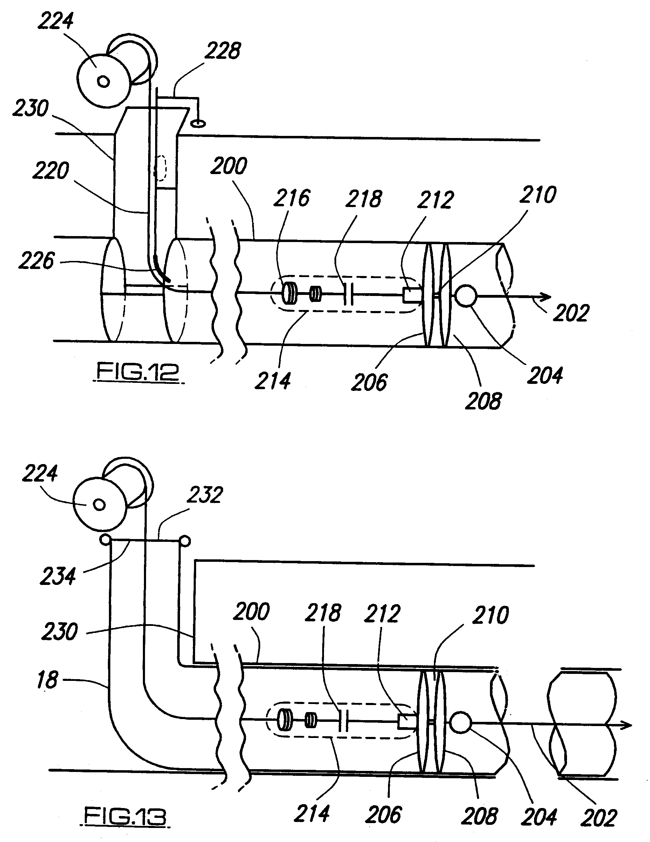

In the arrangement of Fig. 7, a modified radial wave guide arrangement is shown and it has four arms 54, 56, 58 and 60. As many arms as are required can be provided, as shown in dotted lines, and in fact instead of radial arms there may simply be a pair of spaced parallel discs forming the radial wave guide. In such latter case it may not be necessary to cause the radial wave guide to rotate but the provision of the discs still ensures the even application of the energy to the lining tube. An embodiment operating in this way is shown in Figs. 12 and 13.

In use, the apparatus shown in Fig. 5 is simply pulled along the inside of the pipeline or passageway whilst the radial wave guide is caused to rotate. The rate of progression of the apparatus is related to the rate of cure of the tube 36, the objective being to ensure complete and efficient cure of the entire lining tube.

If necessary, the resin matrix in the lining tube 36 when it is a CIP lining tube will be filled with particles which are activated by the applied microwave energy. When the system is effective, the rapid and efficient heating up of the resin takes place, and when the resin cure commences, it will be self continuing because resin curing is exothermic and heat will be generated to continue the cure. It may therefore simply be a matter of initiating the cure using the microwave energy in which case the apparatus can move along the pipeline or passageway at a faster rate.

As indicated, the main application for this invention will be for CIP lining tubes, but as long as a thermoplastic tube contains particles such as 32 which can be activated by the microwave energy, the apparatus and method can be used for such tubes. The thermoplastic tubes which are suitable to be heated by this method are inflated after softening in order to place the tubes on the pipeline to be lined. Care should be taken to ensure that the thermoplastic tubes are softened to the correct degree, because if they are not fully softened, they will when they re-cool tend to return to the original size whereas if they are heated to too great an extent, they will become too fluid to handle. The heating should be to the extent that the original memory is lost and a new memory in the enlarged state can be imposed.

Any suitable means such as energy deflectors or reflectors may be provided if necessary for causing the microwave energy to deflect outwardly onto the tube 36. Also, the axial wave guide 42 may comprise a flexible bellows construction to enable it to flex having regard to the changes in direction of the passageway in which the apparatus is used.

Instead of using a conventional wave guide, it is also possible to use a coaxial cable with a radial energy distributor (dipole) at the end thereof such as an antenna located at a suitable nodal point. As described hereinafter with such antenna it is possible to use a parabolic mirror to focus the energy so that it is strictly radial in a particular direction, and then the parabolic mirror can be rotatable in order to apply the energy sequentially and circumferentially.

Although the energy generating device 40 is shown as being inside the pipeline or passageway, it could be located at ground level, and this is especially so where the energy distributing means is a coaxial cable which extends into and along the pipeline or passageway in an axial direction and leads to a radial distributor.

The equipment shown in Fig. 5 suitably will be winched through the pipeline or passageway, and will typically include a transformer and electrical feed cable. To facilitate its movement, the equipment may be mounted on skids, and these skids will also maintain the equipment reasonably centrally in the pipeline or passageway. Any suitable frequency of operation may be selected, but at the present the utilisation of 2.45 GHz frequency seems most appropriate. With the progression of the apparatus through the lining tube, the lining will be heated progressively, and the interior of the lining in either case preferably will be held under pressure, typically air pressure up to 1 bar. When the flexible seal skirts are used, the apparatus can indeed be used under water and water can be used for the inflation of the lining.

Where the lining tubes embody particles to enable them to respond to the microwave energy, it is preferable that these particles be below a size of 10 micron as the smaller particles respond more efficiently to microwave energy. Curie temperature ferrites can be used as the particles and they have the advantage that they will stop heating up as soon as they reach the Curie temperature.

If it is desired to monitor the temperature to which the linings are heated, infra red cameras could be used. The energy applied by the apparatus may be controlled by using pulsed mode operation.

Suitable mechanical mounting of rotating parts can be effected by conventional arrangements.

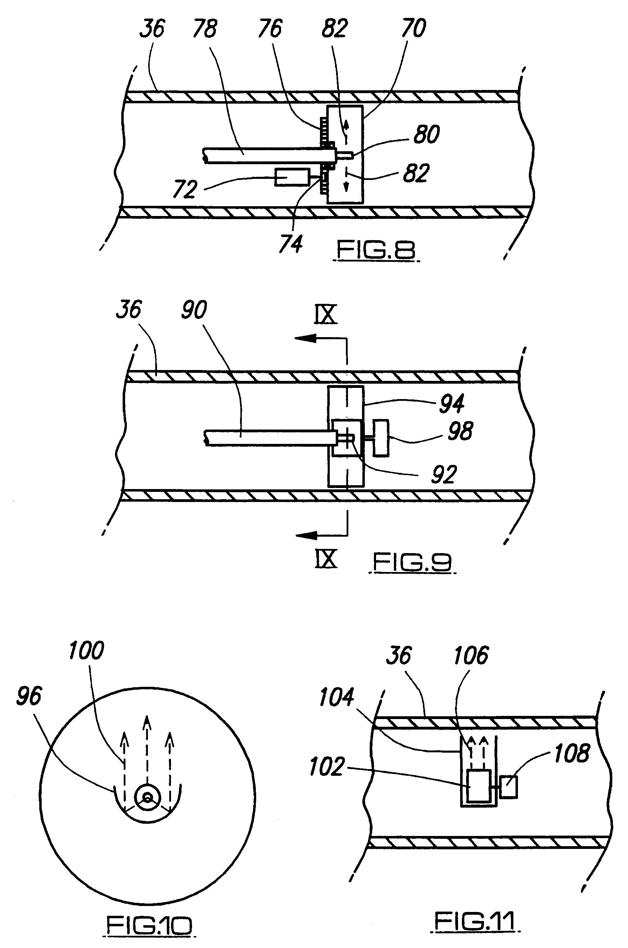

As indicated herein, the method of applying the microwave energy can be effected in various forms. In each case it is necessary that the microwave energy should be directed radially onto the lining, but this can be achieved in various ways. Several alternative ways are indicated in Figures 8- 11, and it should be mentioned that in relation to the embodiments of these figures, all of the features hereinbefore referred to in relation to previous figures can be employed where appropriate, and therefore further specific details of these features are not described in relation to the embodiments of Figs. 8-11. Only the essential differences are indicated.

In the arrangement of Fig. 8, the radio waveguide 70 is constructed as illustrated in Figs. 5 and 6, and may be modified as described in relation to Fig. 7, and is rotatable by means of a drive motor 72 which drives through gearing 74 and 76 respectively on the motor shaft and on the waveguide 70. A coaxial microwave generating cable 78 does not rotate, but it penetrates centrally of the waveguide 70, and has a dipole 80 inside the waveguide which emits the microwave energy radially as indicated by the arrows 82.

The operation of the apparatus in Fig. 8 will be readily described insofar as the waveguide is pulled through the lining tube 36, the waveguide is rotated to distribute the microwave energy onto the lining tube 36.

In the arrangement of Figs. 9 and 10, again a coaxial cable 90 is used, and the dipole 92 is at the centre of the waveguide 94. This waveguide 94 is made up of a pair of discs, and within the waveguide is a parabolic reflector 96 which is adapted to be rotated about the dipole 92 by means of a motor 98.

As can be seen from Fig. 10, the parabolic reflector 96 focuses the microwave energy 100 (which would otherwise be distributed radially in all directions) so that a beam of the microwave energy impinges upon the lining tube 36, but that beam is progressively rotated around the circumference of the lining tube as the assembly is moved along the inside of the lining tube for the purposes hereinbefore described.

In the arrangement of Fig. 11, a microwave energy source such as a magnetron 102 is arranged inside the waveguide 104 and is arranged to direct its beam of microwave energy radially as indicated by arrows 106. The entire waveguide and magnetron are rotated by a motor 108 to cause the progressive application of the energy 106 to the lining tube 36 in a circumferentially progressive manner.

Figs. 12 and 13 show other arrangements according to the invention.

In Fig. 12, the microwave apparatus is shown as being pulled through an underground sewer 200 by means of a pulling rope 202, which is connected to an eye 204 on the downstream end of the apparatus. The eye is coupled to the wave guide arrangement which comprises a pair of discs 206, 208 which are parallel and spaced to define the microwave energy transmission space (waveguide). At the centre of this space is the antenna 210 which is driven by a magnetron 212 on the outside of the left hand disc 206. The antenna emits the energy in all radial directions and it may or may not be used with a parabolic reflector as described hereinbefore.

The magnetron 212 is contained in an insulated casing 214 along with other electrical equipment such as a transformer 216 and a capacitor 218.

The capacitor is coupled by means of an insulated electrical cable 220 which leads to ground level and is wound on a cable drum 224 at said ground level.

In this arrangement, the cable 220 is guided by means of a cable guide 226 which is supported by framework 228 on the ground surface and on the wall of the manhole 230 which leads to the underground pipe 220.

This arrangement can be adopted where the apparatus is for curing say a length of resin impregnated tube positioned at a particular location on the surface of the pipe 200.

The discs 206 and 208 may be mesh discs where air is used for pressurising the interior of the pipe 200 and for inflating the length of impregnated tube against the pipe 200.

The discs 206, 208 preferably are metallic, and when they are perforated, the perforations should be designed so as not to be related to the wave length of the energy to ensure that the energy is not lost through the perforations but is concentrated at the outer periphery of the discs and is applied to the lining material.

Where the discs are to be used under water, the perforations may be ommitted, but there may need to be connecting channels leading to the outsides of the discs, and bridging the wave guide to allow the water to pass from one side of the wave guide to the other to eliminate the discs acting with a piston effect.

The edges of the discs preferably are flexible so as to accommodate variations in pipe shape, step joints and pipe intrusions such as root and lateral pipe intrusions.

Where the apparatus is used underwater, the sealing effect at the periphery of the discs may require to be more effective. The appropriate power supply connecting through cable 220 will be provided, and this power supply can be varied by adopting a pulsed power supply arrangement. The intention is that the power should be coupled to the magnetron to give a microwave emission or frequency in the order of 2.45 GHz.

Fig. 13 basically shows the arrangement of Fig. 12, but when used in connection with a CIP lining which is being everted into the passageway 200 in a manner similar to that illustrated in Fig. 1. Also, the cable guide 226 is omitted, as the elbow pipe 18 will in conventional manner form the cable guide. The top of the pipe 18 may be sealed by means of a split cover 232, 234, so that the inflating pressure can be maintained (when air is used) but otherwise the arrangement of Fig. 13 is identical to that of Fig. 12, and similar reference numerals have been used.

Where necessary, the apparatus can incorporate a device for deflecting any reflected waves and providing a means to absorb such reflected waves in order to avoid the reflected waves being returned to the magnetron, which could damage the magnetron. Such deflecting devices are well known and indeed are invisible to the emitted energy but deflect the reflected energy.

## Claims

1. The method of lining a pipeline or passageway (10,28) wherein a lining tube (36) positioned in the pipeline or passageway has an apparatus (40,44)passed therethrough, and the apparatus provides microwave energy radially directed at the inside of the lining tube (36), and the lining tube (36) is sensitive to that energy in either of two ways namely (i) it has a curable resin therein which is cured by the application of the energy or (ii) it is thermoplastic and contains a particulate polar material (32) which heats up under the action of the microwave energy to soften the tube (10) so that it can be expanded, characterised in that the microwave energy is in the form of one or more radial streams (100) which are rotated about the axis of the pipeline or passageway (10,28) as the apparatus is passed through the lining tube (10,28).

2. The method of claim 1, wherein the said one or more radial streams (100) is/are rotated by rotation of a waveguide (44) along which the stream or streams (100) passes or pass.

3. The method of claim 1 or 2, wherein the energy generating source (102) is part of the apparatus, is arranged to direct a stream (100) of microwave energy radially and is rotated about the axis of the pipeline or passageway (10,28).

4. The method according to any of claims 1 to 3 wherein the energy is supplied through a coaxial cable (78) to a dipole (80) which is arranged to emit the energy radially of the pipeline or passageway (10,28).

5. The method according to claim 4, wherein the energy is focused by a reflector (96) into a beam (100), and the reflector (96) is rotatable to cause the beam (100) to rotate peripherally of the lining tube (36).

6. Apparatus for performing the method of claim 1, comprising a microwave energy source (40), a waveguide (44) adapted to direct energy from the source (40) radially into the lining tube (36), and means to cause progression of the radially directed energy (100) circumferentially of the lining tube (36).

7. Apparatus according to claim 6, wherein said waveguide (44) is rotatable relative to the microwave energy source (40) to effect said circumferential progression.

8. Apparatus according to claim 7, wherein the microwave energy source (40) is fixed relative to the waveguide (44).

9. Apparatus according to claim 8 wherein the microwave energy source (40) is mounted for rotation with the waveguide (44).

10. Apparatus according to claim 9, wherein the energy source includes a dipole (92) at the end of a coaxial cable (78).

11. Apparatus according to claim 10, wherein there is a parabolic reflector (96) arranged to focus the energy from the dipole (92) into a radial beam (100).

12. Apparatus according to claim 11, wherein the waveguide comprises spaced discs (206,208) and the reflector (96) is adapted to be rotated around the dipole (210).

13. Apparatus according to any preceding claim 6 to 11, wherein the waveguide (44) is in the form of one or more arms (46,48,54,56,58,60).

14. Apparatus for applying micro wave energy to a lining of a pipeline or passageway according to the method of claim 1, comprising a microwave energy source (212), a waveguide (206,208) adapted to direct energy from the source (212) radially into the lining tube (36), said waveguide (206,208) comprising a pair of spaced discs (206,208) adapted to lie with their planes transverse to the axis of the pipeline or passageway (10,28).

15. Apparatus according to claim 14, wherein the discs (206,208) have sealing members at the periphery thereof to seal against the pipeline or passageway surface.

16. Apparatus according to claim 14 or 15, wherein the microwave energy source (212) comprises an antenna (210) at the centre of the waveguide (206,208).

17. Apparatus according to claim 16, wherein the energy source (212) comprises a magnetron (212) connected to the antenna (210) but located outside the waveguide (206,208).

18. Apparatus according to claim 17, wherein the magnetron (212) is contained in an insulated canister (214) along with other electrical components (218) to provide the required output from the magnetron (212), and the canister (214) is adapted to travel along the pipeline or passageway (10,28) with the waveguide (206,208), and power is supplied thereto by an electrical cable (220).

## Patentansprüche

1. Verfahren zum Auskleiden einer Pipeline oder eines Kanals (10, 28), bei dem durch eine in der Pipeline oder in dem Kanal positionierte Futtertube (36) eine Vorrichtung (40, 44) geführt wird, und die Vorrichtung Mikrowellenenergie radial auf die Innenseite der Futtertube (36) gerichtet aufbringt, und die Futtertube auf eine von zwei Weisen für diese Energie empfindlich ist, nämlich (i) sie enthält einen aushärtbaren Harz, der durch das Aufbringen der Energie aushärtet, oder (ii) sie ist thermoplastisch und enthält ein partikelförmiges Polarmaterial (32), das aufgrund der Einwirkung der Mikrowellenenergie erhitzt wird, so daß die Tube (10) erweicht und sich ausdehnen kann, dadurch gekennzeichnet, daß die Mikrowellenenergie die Form von einem oder mehreren radialen Strömen (100) hat, die um die Achse der Pipeline oder des Kanals (10, 28) rotieren, während die Vorrichtung durch die Futtertube (10, 28) geführt wird.

2. Verfahren nach Anspruch 1, bei dem der/die genannte(n) ein oder mehreren radialen Ströme (100) durch Rotation eines Hohlleiters (44) gedreht wird/werden, durch den der Strom bzw. die Ströme (100) passiert/passieren.

3. Verfahren nach Anspruch 1 oder 2, bei dem die Energieerzeugungsquelle (102) Teil der Vorrichtung ist, so angeordnet ist, daß ein Strom (100) von Mikrowellenenergie radial gerichtet wird, und um die Achse der Pipeline oder des Kanals (10, 28) gedreht wird.

4. Verfahren nach einem der Ansprüche 1 bis 3, bei dem die Energie durch ein Koaxialkabel (78) zu einem Dipol (80) gespeist wird, der so angeordnet ist, daß er die Energie radial zur Pipeline oder zum Kanal (10, 28) ausstrahlt.

5. Verfahren nach Anspruch 4, bei dem die Energie durch einen Spiegel (96) zu einem Strahl (100) gebündelt wird und der Spiegel (96) drehbar ist, um zu bewirken, daß der Strahl (100) periphär zur Futtertube (36) rotiert.

6. Vorrichtung zum Durchführen des Verfahrens von Anspruch 1, umfassend eine Mikrowellenenergiequelle (40), einen Hohlleiter (44) zum Richten von Energie von der Quelle (40) radial in die Futtertube (36), und ein Mittel, um das Fortschreiten der radial gerichteten Energie (100) umfangsmäßig zur Futtertube (36) zu bewirken.

7. Vorrichtung nach Anspruch 6, bei der der genannte Hohlleiter (44) relativ zur Mikrowellenenergiequelle (40) drehbar ist, um das genannte umfangsmäßige Fortschreiten zu bewirken.

8. Vorrichtung nach Anspruch 7, bei der die Mikrowellenenergiequelle (40) relativ zum Hohlleiter (44) fest ist.

9. Vorrichtung nach Anspruch 8, bei der die Mikrowellenenergiequelle (40) zur Rotation mit dem Hohlleiter (44) montiert ist.

10. Vorrichtung nach Anspruch 9, bei der die Energiequelle einen Dipol (92) am Ende eines Koaxialkabels (78) beinhaltet.

11. Vorrichtung nach Anspruch 10, bei der ein Parabolspiegel (96) angeordnet ist, um die Energie von dem Dipol (92) zu einem Radialstrahl (100) zu bündeln.

12. Vorrichtung nach Anspruch 11, bei der der Hohlleiter beabstandete Scheiben (206, 208) umfaßt und der Spiegel (96) um den Dipol (210) gedreht wird.

13. Vorrichtung nach einem der vorherigen Ansprüche 6 bis 11, bei der der Hohlleiter (44) die Form von einem oder mehreren Armen (46, 48, 54, 56, 58, 60) hat.

14. Vorrichtung zum Aufbringen von Mikrowellenenergie auf eine Auskleidung einer Pipeline oder eines Kanals nach dem Verfahren von Anspruch 1, umfassend eine Mikrowellenenergiequelle (212), einen Hohlleiter (206, 208) zum Richten von Energie von der Quelle (212) radial in die Futtertube (36), wobei der genannte Hohlleiter (206, 208) ein Paar beabstandeter Scheiben (206, 208) aufweist, die mit ihren Ebenen quer zur Achse der Pipeline oder des Kanals (10, 28) liegen.

15. Vorrichtung nach Anspruch 14, bei der die Scheiben (206, 208) Dichtungselemente an ihrem Umfang aufweisen, um gegen die Pipeline- oder Kanaloberfläche abzudichten.

16. Vorrichtung nach Anspruch 14 oder 15, bei der die Mikrowellenenergiequelle (212) eine Antenne (210) in der Mitte des Hohlleiters (206, 208) umfaßt.

17. Vorrichtung nach Anspruch 16, bei der die Energiequelle (212) ein Magnetron (212) umfaßt, das an die Antenne (210) angeschlossen ist, sich aber außerhalb des Hohlleiters (206, 208) befindet.

18. Vorrichtung nach Anspruch 17, bei der das Magnetron (212) in einem isolierten Kanister (214) zusammen mit anderen elektrischen Komponenten (218) enthalten ist, um den benötigten Ausgang von dem Magnetron (212) bereitzustellen, und der Kanister (214) entlang der Pipeline oder des Kanals (10, 28) mit dem Hohlleiter (206, 208) bewegt und Strom durch ein Stromkabel (220) zugeführt wird.

## Revendications

1. Une méthode de garnissage d'une tuyauterie ou d'un passage (10, 28) dans laquelle le tube de garnissage (36), positionné dans la tuyauterie ou le passage, possède un appareil (40, 44) passant à travers ce dernier, et l'appareil fournit unr énergie hyperfréquence dirigée dans le plan radial sur la face interne du tube de garnissage (36), et le tube de garnissage (36) est sensible à cette énergie de l'une ou de l'autre manière, à savoir (i) il incorpore une résine durcissable qui est durcie à la suite de l'application de l'énergie, ou (ii) il est réalisé en matière thermoplastique et contient un matériau polaire en particules (32) qui se réchauffe sous l'action de l'énergie hyperfréquence afin de ramollir le tube (10) pour qu'il puisse se dilater, caractérisée en ce que l'énergie hyperfréquence se présente sous la forme d'un ou de plusieurs flux radiaux (100) qui sont tournés autour de l'axe de la tuyauterie ou du passage (10, 28) au fur et à mesure que l'appareil passe à travers le tube de garnissage (36).

2. La méthode de la revendication 1, dans laquelle ledit flux radial, ou lesdits flux radiaux (100) est/sont tourné(s) grâce à la rotation d'un guide d'ondes (44) le long duquel le flux ou les flux (100) passe ou passent.

3. La méthode de la revendication 1 ou 2, dans laquelle la source génératrice d'énergie (102) faisant partie de l'appareil est agencée de manière à diriger un flux (100) d'énergie hyperfréquence dans le plan radial, et est tournée autour de l'axe de la tuyauterie ou du passage (10, 28).

4. La méthode, selon les stipulations de l'une quelconque des revendications 1 à 3, dans laquelle l'énergie est fournie par l'intermédiaire d'un câble coaxial (78) à un dipôle (80), qui est agencé de façon à émettre l'énergie dans le plan radial par rapport à la tuyauterie ou au passage (10, 28).

5. La méthode, selon les stipulations de la revendication 4, dans laquelle l'énergie est focalisée en un faisceau (100) grâce à un réflecteur (96), et le réflecteur (96) peut être tourné afin d'obliger le faisceau (100) à tourner dans le plan périphérique par rapport au tube de garnissage (36).

6. Un appareil permettant d'exécuter la méthode mentionnée à la revendication 1, comprenant une source d'énergie hyperfréquence (40), un guide d'ondes (44) adapté de façon à diriger l'énergie à partir de la source (40) dans le plan radial jusque dans le tube de garnissage (36) et un moyen pour obliger l'énergie dirigée radialement (100) à progresser dans le plan circonférentiel par rapport au tube de garnissage (36).

7. Un appareil, selon les stipulations de la revendication 6, dans lequel ledit guide d'ondes (44) peut être tourné par rapport à la source d'énergie hyperfréquence (40) afin d'effectuer ladite progression circonférentielle.

8. Un appareil, selon les stipulations de la revendication 7, dans lequel la source d'énergie hyperfréquence (40) est fixe par rapport au guide d'ondes (44).

9. Un appareil, selon les stipulations de la revendication 8, dans lequel la source d'énergie hyperfréquence (40) est montée de façon à tourner en conjonction avec le guide d'ondes (44).

10. Un appareil, selon les stipulations de la revendication 9, dans lequel la source d'énergie comporte un dipôle (92) à l'extrémité d'un câble coaxial (78).

11. Un appareil, selon les stipulations de la revendication 10, dans lequel un réflecteur parabolique (96) est agencé de façon à focaliser l'énergie provenant du dipôle (92) en un faisceau radial (100).

12. Un appareil, selon les stipulations de la revendication 11, dans lequel le guide d'ondes comporte des disques espacés (206, 208), et le réflecteur (96) est adapté de façon à être tourné autour du dipôle (210).

13. Un appareil, selon les stipulations de l'une quelconque des revendications précédentes 6 à 11, dans lequel le guide d'ondes (44) se présente sous la forme d'un ou de plusieurs bras (46, 48, 54, 56, 58, 60).

14. Un appareil destiné à appliquer l'énergie hyperfréquence sur le garnissage d'une tuyauterie ou d'un passage, selon les stipulations de la méthode de la revendication 1, comprenant une source d'énergie hyperfréquence (212), un guide d'ondes (206, 208) adapté de façon à diriger l'énergie provenant de la source (212) dans un plan radial et à l'acheminer dans le tube de garnissage (36), ledit guide d'ondes (206, 208) comprenant une paire de disques espacés (206, 208) qui sont adaptés de façon à ce que leurs plans se trouvent en perpendiculaire par rapport à l'axe de la tuyauterie ou du passage (10, 28).

15. Un appareil, selon les stipulations de la revendication 14, dans lequel les disques (206, 208) sont munis d'éléments d'étanchéité sur la périphérie de ceux-ci, pour se mettre en contact avec la surface de la tuyauterie ou du passage.

16. Un appareil, selon les stipulations de la revendication 14 ou 15, dans lequel la source d'énergie hyperfréquence (212) comporte une antenne (210) au centre du guide d'ondes (206, 208).

17. Un appareil, selon les stipulations de la revendication 16, dans lequel la source d'énergie (212) comprend un magnétron (212) qui est connecté à l'antenne (210), mais est situé à l'extérieur du guide d'ondes (206, 208).

18. Un appareil, selon les stipulations de la revendication 17, dans lequel le magnétron (212) est abrité dans un boîtier isolé (214), en conjonction avec d'autres composants électriques (218) destinés à fournir la sortie requise au niveau du magnétron (212), et le boîtier (214) est adapté de manière à se déplacer le long de la tuyauterie ou du passage (10, 28) avec le guide d'ondes (206, 208), et l'énergie électrique lui est acheminée par un câble électrique (220).
